# EUROPEAN PATENT APPLICATION

(11) **EP 2 065 825 A1**
(43) Date of publication of application: **03.06.2009**
(21) Application number: 08168999.4
(22) Date of filing: 13.11.2008
(51) Int. Cl.: G06F 21/00

(54) **Apparatus and method for detecting DLL inserted by malicious code**

(30) Priority: 20.11.2007 KR 20070118434
(71) Applicant: Electronics and Telecommunications Research Institute, Yuseong-gu Daejeon (KR)
(72) Inventor: Moon, Su Jang, Daejeon (KR); Hong, Chul Kim, Gyeongsangbuk-do (KR); Young, Tae Yun, Daejeon (KR)
(74) Representative: Betten & Resch

(57) **Abstract**

Provided are an apparatus and method for detecting a Dynamic Link Library (DLL) inserted by a malicious code. The method includes collecting first DLL information from an image file of a process before the process is executed; collecting second DLL information loaded into a memory as the process is executed; comparing the first DLL information with the second DLL information to extract information on an explicit DLL; and determining whether the explicit DLL is a DLL inserted by a malicious code or not.

## Description

### CROSS-REFERENCE TO RELATED APPLICATION

This application claims priority to and the benefit of Korean Patent Application No. 2007-118434, filed November 20, 2007, the disclosure of which is incorporated herein by reference in its entirety.

### BACKGROUND

### 1. Field of the Invention

The present invention relates to a method and apparatus for detecting a malicious code, and more particularly to an apparatus and method for detecting a Dynamic Link Library (DLL) inserted by a malicious code.

### 2. Discussion of Related Art

Generally, a computer system has a structure, in which various hardware is driven based on an operating system. The operating system is driven when power is supplied to the computer system to perform an interface function between a user and the hardware. The operating system includes Solaris, Linux, Windows, etc. Windows is most commonly used as an operating system supporting a virtual memory.

In a Windows-based operating system, a part of data or instructions to be instantly executed by the system are first loaded into a memory, and the remaining parts of them are later read from a file as necessary to manage the virtual memory and to efficiently use the memory.

Meanwhile, developments in both wired and wireless communications have led a communication function to be included in the operating system. While the developments in telecommunications provide users with convenience, the users can be easily exposed to the possible risk of an attack caused by a malicious code. Malicious codes can be broken down into Viruses, Worms, and Spyware.

The malicious code can intrude into the operating system using a Dynamic Link Library (DLL) insertion technique, which is generally used in a Windows environment. Various DLL insertion techniques may be used for spreading the malicious code into operating systems.

Accordingly, research on the detection of a DLL inserted by a malicious code is actively progressing. For example, there is a method that monitors Application Program Interfaces (API) related to the DLL insertion and alarms it as soon as it is used. In another method, a DLL loaded into a process is analyzed. In addition, there exists another method in which a list and hash value of a known system DLL is previously extracted to compare the extracted results with a possible malicious code.

According to the above conventional DLL detection methods, a DLL inserted by a malicious code is detected by a previously installed detection tool or based on one's empirical knowledge. Therefore, in order to detect a DLL inserted by a malicious code with malicious intent, a previously installed detection tool or a user's empirical knowledge is essential.

In order to provide a user with convenience, demand for a method of automatically searching for a DLL inserted by a malicious code and capable of utilizing information about the automatically searched DLLs as a system analysis tool should be met.

### SUMMARY OF THE INVENTION

The present invention is directed to an apparatus and method for determining whether or not a Dynamic Link Library (DLL) that is inserted into a memory region of a specific process has been inserted with malicious intent.

The present invention is also directed to an apparatus and method for detecting a DLL inserted by a malicious code in a Windows-based operating system using profiling and a heuristic determination method.

The present invention is further directed to an apparatus and method for detecting a DLL inserted with malicious intent by inspecting a process after hacking is executed in an attacked system in real time based on a heuristic method using profiling.

Additional objects and advantages of the present invention will be set forth in part in the description which follows and, in part, will be obvious from the description, or may be learned by practice of the invention.
One aspect of the present invention provides a method of detecting a Dynamic Link Library (DLL) inserted by a malicious code, including: The method includes collecting first DLL information from an image file of a process before the process is executed; collecting second DLL information loaded into a memory as the process is executed; comparing the first DLL information with the second DLL information to extract information on an explicit DLL; and determining whether the explicit DLL is a DLL inserted by a malicious code or not.

Another aspect of the present invention provides an apparatus for detecting a DLL inserted by a malicious code including: a DLL information collector that collects first DLL information from an image file of a process before the process is executed, and collects second DLL information that is loaded into a memory as the process is executed; and a malicious DLL detector that compares the first DLL information with the second DLL information to extract information on an explicit DLL and determines whether the extracted explicit DLL is a DLL that is inserted by a malicious code or not.

### BRIEF DESCRIPTION OF THE DRAWINGS

The above and other features and advantages of the present invention will become more apparent to those of ordinary skill in the art by describing in detail exemplary embodiments thereof with reference to the attached drawings in which:

FIG. 1 illustrates the configuration of an apparatus for detecting a Dynamic Link Library (DLL) inserted by a malicious code according to an exemplary embodiment of the present invention;

FIG. 2 illustrates control flow performed to determine whether a DLL is inserted by a malicious code according to an exemplary embodiment of the present invention; and

FIG. 3 illustrates a Portable Executable (PE) file format in a Windows environment according to an exemplary embodiment of the present invention.

### DETAILED DESCRIPTION OF EMBODIMENTS

The present invention will now be described more fully hereinafter with reference to the accompanying drawings, in which exemplary embodiments of the invention are shown. This invention may, however, be embodied in different forms and should not be construed as limited to the exemplary embodiments set forth herein.

Before describing an exemplary embodiment of the present invention in detail, a Dynamic Link Library (DLL) insertion technique, which is used in a Windows environment, will be described below.

Generally, the DLL insertion technique, which is used in the Windows environment, may be classified into a method using a Windows hook, a method using CreateRemoteThread and a method using a debugging Application Program Interface (API), depending on approach.

In the method using the Windows hook, after a code is inserted into a DLL, the DLL is loaded into a remote process through the Windows hook. The Windows hook is a procedure that is placed between messages exchanged between an operating system and an application program or between application programs to enable inspection and operation of the messages. Further, the Windows hook enables the messages to be inspected or changed and to be prevented from being transferred. Therefore, which message is transferred to a hook procedure depends on the type and range of hook. The hook type may be defined to a macro constant beginning with WH_. For example, WH_KEYBOARD is a hook procedure for inspecting a keyboard message, WH_CALL WNDPROC is a hook procedure for processing before transmitting a message to SendMessage function and WH_CALL WNDPROCRET is a hook procedure that is called after the Windows procedure processes the message. Meanwhile, the method using the Windows hook is widely used for a malicious code such as Keylogger.

The method using CreateRemoteThread is one of the most frequently used methods for detecting a malicious code. In the method using CreateRemoteThread, a DLL can be dynamically executed in a target process, and this method is used for detecting a malicious code such as Level Rootkit.

Finally, the method using a debugging API uses a strong debugging API provided by Windows. The method using a debugging API is originally suggested for debugging a program rather than for malicious intent, and is one of methods capable of handling a memory. Representative APIs in the Windows environment are ReadProcessMemory and WriteProcessMemory. For example, when DEBUG_ONLY_THIS_PROCESS and DEBUG_PROCESS in a dwCreationFlag as a parameter of a CreateProcess are selected to be generated, a process calling CreateProcess becomes a debugger. The debug event is notified to the debugger through WaitForDebugEvent.

In the meantime, when the above-described methods are used, a DLL may be inserted by a malicious code through previously compiled programs. Therefore, explicit loading using LoadLibrary API may be used. In the explicit loading, whether a DLL is loaded or not is determined when a user desires to load into the corresponding DLL to use a desired function, rather than when it is linked.

Therefore, in the present invention, a method for reducing a analysis for detecting a DLL inserted by a malicious code by comparing the information on DLL(s) that is imported before the corresponding process is executed and the information on DLL(s) that is explicitly loaded after the process is executed is suggested.

For this purpose, in an exemplary embodiment of the present invention, operations for collecting DLL information through an image file recorded in a memory before at least one target process is executed and operations for collecting DLL information loaded as the at least one target process is executed will be described. Also, the collected two types of DLL information are compared to obtain explicit DLL information, and operations for detecting DLL information that is inserted by a malicious code with malicious intent based on the obtained explicit DLL information will be described below. In addition, in an exemplary embodiment of the present invention, in order to examine DLL information inserted with malicious intent based on explicit DLL information, a heuristic method using a DB profiling a DLL that is developed for each specific company is applied.

The present invention will now be described more fully hereinafter with reference to the accompanying drawings, in which exemplary embodiments of the invention are shown. This invention may, however, be embodied in different forms and should not be construed as limited to the exemplary embodiments set forth herein.

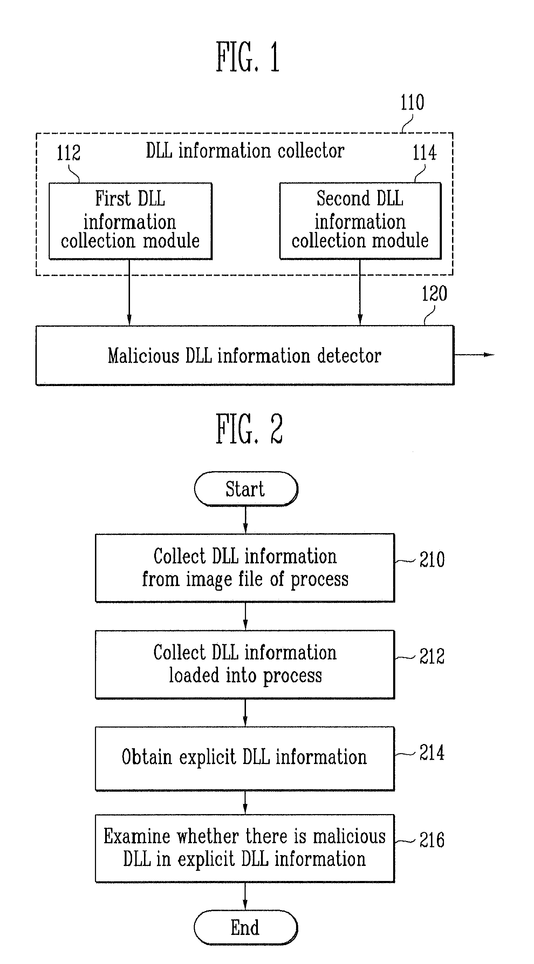

FIG. 1 illustrates the configuration of an apparatus for detecting a DLL inserted by a malicious code according to an exemplary embodiment of the present invention.

Referring to FIG. 1, a DLL information collector 110 collects DLL information on at least one target process to detect a DLL inserted with malicious intent. The DLL information collector 110 includes a plurality of DLL information collection modules depending on a type of DLL information to be collected. In FIG. 1, the DLL information collector including two DLL information collection modules is illustrated.

A first DLL information collection module 112 collects DLL information from an image file corresponding to the at least one target process before at least one target process is executed. That is, the first DLL information collection module 112 tracks a Portable Executable (PE) file in a binary file format in Windows to locate an Import table and collects the DLL information that imports a symbol by referring to the Import table of which location is confirmed.

The Import table stores the location and name of an external function that the corresponding process uses. For example, in a case of listbox.exe, various functions in kernel32.dll and user32.dll are used. Names of the functions are previously stored in an execution file, and the Import table informs the locations where they are stored.

First, the first DLL information collection module 112 locates the PE header. Next, it finds out the location of the Import table, which is spaced apart from the PE header by a predetermined distance, and then finds out the location of the IMAGE_IMPORT_DESCRIPTOR with reference to a value of the Import table. The IMAGE_IMPORT_DESCRIPTOR that exists in that location is analyzed to find out a called DLL and/or a function.

A second DLL information collection module 114 collects DLL information that is loaded into a memory as at least one target process is executed. The second DLL information collection module 114 may collect the DLL information corresponding to the currently executing process using Process Status Application Programming Interface (PSAPI) library or ToolHelper API.

The PSAPI library file includes a program code used for searching for information on a process or a device driver executed by a Windows application program in a system. Therefore, information on a process list provided by the Windows-based operating system can be provided by the PSAPI library.

Therefore, when the second DLL information collection module 114 uses the PSAPI library, it uses an API, from which information on a process list that is being executed can be obtained, among APIs of the PSAPI library. Also, the second DLL information collection module 114 may collect DLL information corresponding to the currently executing process using the ToolHelper API.

The DLL information collected by the first DLL information collection module 112 and the DLL information collected by the second DLL information collection module 114 are provided to a malicious DLL detector 120.

The malicious DLL detector 120 compares the two DLL information provided by the first DLL information collection module 112 and the second DLL information collection module 114 to extract explicit DLL information. Afterwards, it is determined whether the extracted explicit DLL is a malicious DLL or not using a profiling DB. The explicit DLL refers to a DLL that is additionally loaded when the at least one target process is executed. The explicit DLL information s is extracted since most DLLs that are inserted by a malicious code are explicit DLLs.

Therefore, the malicious DLL detector 120 determines whether the obtained explicit DLL is the malicious DLL or not by using a profiling DB. The profiling DB is a DB that stores the information on a PE header and its structural characteristics of a DLL file legally produced by a manufacturer. The information on the header and the structural characteristics of the DLL, which is stored in the profiling DB, is compared with the information on the header and the structural characteristics of a DLL file to be examined, so that whether the DLL file to be examined is a malicious DLL or not is determined. There are VERSIONINFO, PE_IMAGE_OPTIONAL_HEADER, and SECTION, as examples of the information on the header and the structural characteristics of a DLL. VERSIONINFO denotes information on a company manufacturing a DLL. Therefore, when VERSIONINFO information of a DLL to be examined is not set, it is determined that the DLL file is malicious. PE_IMAGE_OPTIONAL_HEADER denotes data on a pFile and varies depending on manufacturing companies. Although it is indicated as company A in VERSIONINFO information of a DLL file to be examined, when the PE_IMAGE_OPTIONAL_HEADER information of the DLL file is different from the PE_IMAGE_OPTIONAL_HEADER information of company A stored in a profiling DB, it is determined that the DLL file is a malicious DLL. Similarly, a SECTION structure may vary depending on the companies. When the SECTION structure of a DLL file indicated as company A is different from the SECTION structure of company A stored in the profiling DB, it is determined that the DLL file is a malicious DLL. That is, when the malicious DLL information detector 120 compares the information on the PE header and the structural characteristics of DLLs for each manufacturer stored in the profiling DB with that of a DLL to be examined and recognize the difference between them, it determines that it is a DLL inserted by a malicious code.

FIG. 2 illustrates control flow performed in an operating system to detect a DLL inserted by a malicious code according to an exemplary embodiment of the present invention.

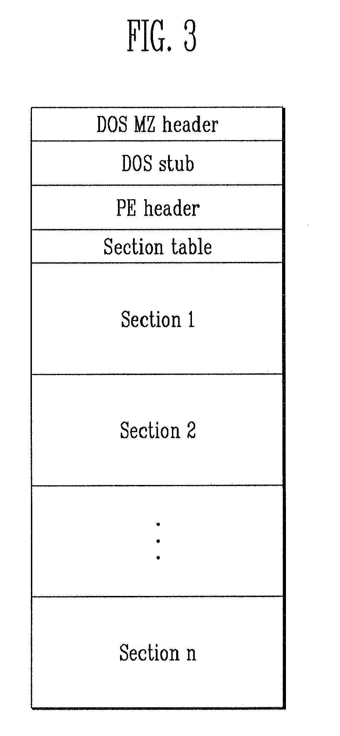

Referring to FIG. 2, DLL information is collected from an image file of a process before the process is executed in step 210. Describing collecting the DLL information from the image file in more detail, the operating system tracks a PE file in a binary file format used in Windows to locate an Import table. Then, the operating system collects DLL information that imports a symbol by referring to the Import table. One example of the PE file format is as illustrated in FIG. 3. As illustrated in FIG. 3, the PE file includes a "DOS MZ header" region, a "DOS stub" region, a PE header" region, a "Section table" region and a plurality of "Section" regions.

The DOS MZ header region is located at a first part of the PE file and indicates the location of MAGIC Number and the following IMAGE_NT_HEADER. When the DOS stub region contains a stub code indicating an error message under the DOS. The PE header region includes information on a PE file format, and includes an IMAGE_FILE_HEADER region including the number and features of sections and an IMAGE_OPTIONAL_HEADER region including information such as features of the PE file and an image base. The Section table region includes substantial information on the section, and the Section region is a region where actual data is located. In the Section region, it begins with an array of IMAGE_IMPORT_DESCRIPTOR structures, serially includes the IMAGE_IMPORT_DESCRIPTOR structures as many as the number of linked DLLs plus 1, and at the end of the array is an empty structure, and thus all elements at the end of the array are NULL. "DWORD Name" variable of the IMAGE_IMPORT_DESCRIPTOR structure has a Relative Virtual Address (RVA) with respect to ASCII string that contains a name of an imported DLL and ends with NULL. The beginning address of the RVA is calculated as 0 when an execution file is loaded into a memory. That is, the RVA is a relative address, in which the execution file begins with 0. When it is assumed that RVA is 0x40 and an execution file is loaded at address 0x1000, the location where the corresponding region is actually loaded into a memory is equal to 0x1040. When a file is dumped, it is observed that there exist IMAGE_IMPORT_DESCRIPTORs for each DLL. Furthermore, when NAME RVA is converted into a file offset, DLL information that is actually imported can be found. When all the information imported by the extracted DLLs is extracted, all DLL information imported by a PE image of the corresponding process may be extracted.

Next, in step 212, as the process is executed, the information of a DLL(s) loaded into a memory is collected. That is, the operating system can collect the information on the DLL(s) corresponding to the currently executing process using a PSAPI library. The PSAPI library provides information on a process list provided by a Windows-based operating system. Therefore, the operating system uses an API that can be used to obtain information on a currently executing process list, among the PSAPI library. In addition, the operating system can collect the DLL information corresponding to the currently executing process using ToolHelper API.

Then, it proceeds with step 214 to compare the two DLL information to extract explicit DLL information. The explicit information refers to information on a DLL that is additionally loaded when the at least one target process is executed.

In step 216, based on the information stored in the profiling DB, it is determined whether the explicit DLL is a malicious DLL or not.

As described above, in one exemplary embodiment of the present invention, the operating system detects a DLL inserted with malicious intent in real time by means of a heuristic method using a profiling DB. Information on the DLL inserted with malicious intent may be utilized as a tool for analyzing an attacked system.

According to the present invention, a DLL inserted with malicious intent can be automatically detected using a DLL profiling and a heuristic determination method, when the hacking has occurred. This method is efficient to be utilized as a tool for analyzing an attacked system.

While the invention has been shown and described with reference to certain exemplary embodiments thereof, it will be understood by those skilled in the art that various changes in form and details may be made therein without departing from the spirit and scope of the invention as defined by the appended claims.

While the present invention is defined with regard to a Windows environment-based operating system, the present invention is applicable to an operating system defining information similar to DLL information in the Windows environment.

## Claims

1. A method of detecting a Dynamic Link Library (DLL) inserted by a malicious code, comprising:
collecting first DLL information from an image file of a process before the process is executed;
collecting second DLL information loaded into a memory as the process is executed;
comparing the first DLL information with the second DLL information to extract information on an explicit DLL; and
determining whether the explicit DLL is a DLL inserted by a malicious code or not.

2. The method of Claim 1, wherein the collecting of the first DLL information from the image file is performed by tracking a Portable Executable (PE) file in a binary file format in a Windows operating system.

3. The method of Claim 1 or 2, wherein the collecting of the second DLL information is performed using a Process Status Application Programming Interface (PSAPI) library that provides information on a process list in an operating system.

4. The method of one of Claims 1 to 3, wherein the information on the explicit DLL is DLL information that is not included in the first DLL information but is included in the second DLL information.

5. The method of one of Claims 1 to 4, further comprising extracting information on PE header and structural characteristics of DLLs manufactured by manufacturers and storing the extracted information in a profiling DB.

6. The method of one of Claims 1 to 5, wherein the determining whether the explicit DLL is a DLL inserted by a malicious code includes comparing the information on the PE header and the structural characteristics of the DLLs stored in the profiling DB with that of the explicit DLL; and, when there is a difference between them, determining that the explicit DLL has been inserted by a malicious code.

7. An apparatus for detecting a DLL inserted by a malicious code, comprising:
a DLL information collector that collects first DLL information from an image file of a process before the process is executed and collects second DLL information that is loaded into a memory as the process is executed; and
a malicious DLL detector that compares the first DLL information with the second DLL information to extract information on an explicit DLL and determines whether the extracted explicit DLL is a DLL that is inserted by a malicious code or not.

8. The apparatus of Claim 7, wherein the DLL information collector includes a first DLL information collector that collects the first DLL information from the image file by tracking a PE file in a binary file format in a Windows environment.

9. The apparatus of Claim 7 or 8, wherein the DLL information collector includes a second DLL information collector that collects second DLL information that is loaded into the memory using a PSAPI library providing information on a process list in the operating system.

10. The apparatus of one of Claims 7 to 9, wherein the malicious DLL detector extracts information on the explicit DLL that is not included in the first DLL information but is included in the second DLL information.

11. The apparatus of one of Claims 7 to 10, further comprising a profiling database that stores information on PE header and of structural characteristics of DLLs manufactured by manufacturers.

12. The apparatus of one of Claims 7 to 11, wherein the malicious DLL detector compares the information on the PE header of the DLLs stored in the profiling DB with that of the explicit DLL, and, when there is a difference between them, determines the explicit DLL as a DLL inserted by a malicious code.
